# EUROPÄISCHE PATENTSCHRIFT

(11) **EP 4 291 802 B1**
(45) Veröffentlichungstag und Bekanntmachung des Hinweises auf die Patenterteilung: **31.12.2025**
(21) Anmeldenummer: 22701523.7
(22) Anmeldetag: 18.01.2022
(51) Int. Cl.: F16F 15/12, B60G 21/055

(54) **PENDELWIPPENDÄMPFER MIT EINER VERDREHACHSE**
PENDULUM ROCKER DAMPER WITH A ROTATION AXIS
AMORTISSEUR OSCILLANT À BALANCIER, DOTÉ D'UN AXE DE ROTATION

(30) Priorität: 09.02.2021 DE 102021102931
(43) Veröffentlichungstag der Anmeldung: 20.12.2023
(73) Patentinhaber: Schaeffler Technologies AG & Co. KG, 91074 Herzogenaurach (DE)
(72) Erfinder: WERNER, Olaf, 77815 Bühl (DE); RUSCH, Alain, 67760 Gambsheim (FR); HÄSSLER, Martin, 76676 Graben-Neudorf (DE); KESSLER, Michael, 77815 Bühl (DE)
(74) Vertreter: Schaeffler Technologies
(86) Internationale Anmeldenummer: PCT/DE2022/100046
(87) Internationale Veröffentlichungsnummer: WO 2022/171231

(56) Entgegenhaltungen:
- EP-A1- 2 011 674
- DE-A1- 102013 002 714
- DE-A1- 102015 203 054
- DE-A1- 102015 211 899
- DE-A1- 102018 108 049
- DE-A1- 102018 108 441
- DE-A1- 102019 118 971
- KR-A- 20150 018 987

## Beschreibung

Die Erfindung betrifft einen Pendelwippendämpfer mit einer Verdrehachse, aufweisend zumindest die folgenden Komponenten:
- eine Eingangsseite;
- eine Ausgangsseite;
- einen Energiespeicher zum Übertragen eines Drehmoments zwischen der Eingangsseite und der Ausgangsseite;
- eine Mehrzahl von Wippenelementen mit einer eingangsseitigen Rollenbahn und einer ausgangsseitigen Rollenbahn; und
- eine korrespondierende Anzahl von Wälzkörpern,

wobei die Eingangsseite zu einer jeweiligen der eingangsseitigen Rollenbahnen je eine Gegenbahn aufweist, zwischen welchen jeweils ein eingangsseitiger Wälzkörper mittels des Energiespeichers abrollbar eingespannt ist, sowie
die Ausgangsseite zu einer jeweiligen der ausgangsseitigen Rollenbahnen je eine Gegenbahn aufweist, zwischen welchen jeweils ein ausgangsseitiger Wälzkörper mittels des Energiespeichers abrollbar eingespannt ist. Der Pendelwippendämpfer ist vor allem dadurch gekennzeichnet, dass von den Wippenelementen jeweils drei separate und axial zueinander versetzt angeordnete Teilbahnen umfasst sind, von welchen die Rollenbahnen gebildet sind. Weiterhin betrifft die Erfindung einen Wankstabilisator mit einem Pendelwippendämpfer.

Aus dem Stand der Technik sind sogenannte Pendelwippendämpfer bekannt.

Beispielsweise sind aus der DE 10 2019 121 204 A1 und der
DE 10 2019 121 205 A1 Konzepte bekannt, um die Steifigkeit einer rotierenden Welle beziehungsweise eines rotierenden Wellensystems in einem Antriebsstrang zu modulieren. Diese Pendelwippendämpfer umfassen eine Eingangsseite und eine Ausgangsseite, welche (in beiden Richtungen) drehmomentübertragend miteinander verbunden sind. Zwischengeschaltet sind eine Mehrzahl von Wippenelementen (auch als Wippen bezeichnet) und eine Mehrzahl von Federelementen. Die Wippenelemente sind mittels zumindest eines Wälzkörpers an der Eingangsseite und/oder an der Ausgangsseite relativ verlagerbar abgestützt. Die Wälzkörper sind mittels der Federelemente zwischen der jeweiligen Übersetzungsbahn und komplementären Gegenbahn abrollbar eingespannt. Mittels dieses Pendelwippendämpfers ist der relative Verdrehwinkel zwischen der Eingangsseite und der Ausgangsseite in einen Federweg der Federelemente umgewandelt. Mittels der Übersetzungsbahnen und der komplementären Gegenbahnen, welche ein Rampengetriebe bilden, ist ein Übersetzungsverhältnis einstellbar und damit eine Steifigkeit des Pendelwippendämpfers einstellbar. Vorteilhaft ist hierbei auch, dass das Übersetzungsverhältnis nicht konstant sein muss, sondern die Steigung des Rampengetriebes über den Verdrehwinkel der Eingangsseite zur Ausgangsseite veränderlich einstellbar ist. Ein weiterer Vorteil eines solchen Pendelwippendämpfers im Vergleich zu anderen Ausführungsformen ist, dass der Pendelwippendämpfer (nahezu) keine Hysterese-Eigenschaften, zumal beim Nulldurchgang, aufweist. Die bekannten Pendelwippendämpfer haben einen großen Bauraumbedarf und sind zum Verringern der Steifigkeit der rotierenden Welle eingerichtet.

Weiterhin sind aus dem Stand der Technik sogenannte Wankstabilisatoren bekannt, mittels welcher das Federverhalten eines Rads einer zweirädrigen Fahrzeugachse auf das jeweils andere Rad kopiert wird. Beispielsweise bei einer Kurvenfahrt wird damit die Rollrate des Fahrzeugkörpers nach kurven-außen verringert. Damit beispielsweise bei einem Durchfahren eines Schlaglochs diese Nachahmung des jeweils anderen Rads nicht stattfindet, sind mehr und mehr aktive Wankstabilisatoren im Einsatz. Diese umfassen einen Aktuator und eine Dämpfervorrichtung. Die Dämpfervorrichtung ist dazu eingerichtet, kurzzeitige (vertikale) Auslenkungen eines Rads (wie sie bei einem Schlagloch auftreten) von einer Übertragung zu entkoppeln und/oder einen Drehmomenteinschlag zum Schutz der Komponenten zu verzögern. Derzeit werden Dämpfervorrichtungen mit einem Elastomer als Dämpfkörper eingesetzt. Diese unterliegen sehr hohen Belastungen mit Drehmomenten von beispielsweise 1,5 kNm [anderthalb Kilo-Newtonmeter]. Weiterhin ist es schwierig, die Übertragungskennlinie einer solchen Dämpfervorrichtung prozesssicher einzustellen, und es treten im Elastomer-Körper über die Lebensdauer Alterungserscheinungen auf. Solche Dämpfervorrichtungen mit einem Elastomer als Dämpfkörper haben den großen Vorteil, dass sie sehr kompakt bauen.

Aus der DE 10 2015 211 899 A1 ist ein Pendelwippendämpfer bekannt, der auf den Oberbegriff des Anspruchs 1 lesbar ist. Die DE102019118971A1 und die DE102015203054A1 offenbaren jeweils weitere bekannte Torsionsschwingungsdämpfer.

Hiervon ausgehend liegt der vorliegenden Erfindung die Aufgabe zugrunde, die aus dem Stand der Technik bekannten Nachteile zumindest teilweise zu überwinden.

Erfindungsgemäß gelöst wird diese Aufgabe durch einen Pendelwippendämpfer gemäß Anspruch 1. Bevorzugte Ausführungsbeispiele sind in den abhängigen Ansprüchen dargelegt.

Die Erfindung betrifft einen Pendelwippendämpfer mit einer Verdrehachse, aufweisend zumindest die folgenden Komponenten:
- eine Eingangsseite;
- eine Ausgangsseite;
- einen Energiespeicher zum Übertragen eines Drehmoments zwischen der Eingangsseite und der Ausgangsseite;
- eine Mehrzahl von Wippenelementen mit einer eingangsseitigen Rollenbahn und einer ausgangsseitigen Rollenbahn; und
- eine zu der Anzahl der Rollenbahnen der Wippenelemente korrespondierende Anzahl von Wälzkörpern,

wobei die Eingangsseite zu einer jeweiligen der eingangsseitigen Rollenbahnen je eine korrespondierende eingangsseitige Gegenbahn aufweist, zwischen welchen jeweils ein eingangsseitiger Wälzkörper mittels des Energiespeichers abrollbar eingespannt ist, sowie
die Ausgangsseite zu einer jeweiligen der ausgangsseitigen Rollenbahnen je eine korrespondierende ausgangsseitige Gegenbahn aufweist, zwischen welchen jeweils ein ausgangsseitiger Wälzkörper mittels des Energiespeichers abrollbar eingespannt ist.

Der Pendelwippendämpfer ist vor allem dadurch gekennzeichnet, dass von den Wippenelementen jeweils drei separate und axial zueinander versetzt angeordnete Teilbahnen umfasst sind, von welchen die Rollenbahnen gebildet sind.

Es wird im Folgenden auf die genannte Verdrehachse Bezug genommen, wenn ohne explizit anderen Hinweis das Zentrum, die axiale Richtung, radiale Richtung oder die Umlaufrichtung und entsprechende Begriffe verwendet werden. In der vorhergehenden und nachfolgenden Beschreibung verwendete Ordinalzahlen dienen, sofern nicht explizit auf das Gegenteilige hingewiesen wird, lediglich der eindeutigen Unterscheidbarkeit und geben keine Reihenfolge oder Rangfolge der bezeichneten Komponenten wieder. Eine Ordinalzahl größer eins bedingt nicht, dass zwangsläufig eine weitere derartige Komponente vorhanden sein muss.

Der hier vorgeschlagene Pendelwippendämpfer ist äußerst kompakt bauend, weil infolge der Anordnung der Rollenbahnen, also sowohl die eingangsseitigen Rollenbahnen als auch die ausgangsseitigen Rollenbahnen, auf dem jeweiligen Wippenelement ein sehr kompakter Aufbau ermöglicht ist. Die Wälzkörper sind in Ihrer Laufrichtung (entsprechend der Wipp-Bewegung des betreffenden Wippenelements) infolge der Anordnung axial nebeneinander eng beieinander anordenbar. Die Laufrichtung ist die Bewegung der Wälzachsen der Wälzkörper bei einer Wipp-Bewegung des betreffenden Wippenelements. In einer Ausführungsform sind die Wälzachsen der Wälzkörper eines Wippenelements in einer Ruhelage des Wippenelements relativ zu dem Energiespeicher auf gleicher Höhe angeordnet, bevorzugt derart, dass allein damit bei gleicher Geometrie der Rollenbahnen ein Kräftegleichgewicht über den Wälzkörpern, den Wippenelementen und den Seiten gebildet ist. Sowohl die Eingangsseite als auch die Ausgangsseite sind in einer vorteilhaften Ausführungsform radial-außen angeordnet. Zentral ist der Bauraum damit einzig von den Wippenelementen und dem Energiespeicher eingenommen. Es sei an dieser Stelle darauf hingewiesen, dass der Energiespeicher einen oder eine Mehrzahl von Elementen umfasst, welche (zumindest im Zusammenspiel) zum Aufnehmen von einer Kraft und zum (nahezu) verlustfreien Abgeben dieser Kraft eingerichtet sind. Ein solches Element ist beispielsweise eine Schraubenfeder, eine Festkörperfeder, ein Gasdruckspeicher oder ein sich gummi-elastisch verhaltender Materialblock. Die von dem Energiespeicher vorgehaltene Kraft ist bevorzugt als Druckkraft bereitgestellt.

Die Gegenbahnen der Eingangsseite und der Ausgangsseite weisen entsprechend nach radial-innen, sodass die Wälzkörper zwischen den Bahnen, welche jeweils eine Bahnpaarung aus einer Rollenbahn und einer korrespondierenden (und komplementären) Gegenbahn bilden, angeordnet sind. Weiter radial-innen zu dem jeweiligen Wippenelement ist der Punkt beziehungsweise die Fläche der Einleitung der Kraft des Energiespeichers angeordnet. Damit ist eine nach radial-außen gerichtete Vorspannung über die Bahnen auf die Wälzkörper vorgehalten. Die Wälzkörper sind damit (bei auslegungsgemäßer Betätigung) einzig abrollend (um ihre jeweilige Wälzachse) relativ zu den Bahnen bewegbar. Es ist damit ein Rampengetriebe geschaffen. In einer bevorzugten Ausführungsform ist keine weitere Maßnahme zum Sichern und/oder Lagern der hier genannten Komponenten des Pendelwippendämpfers vorgesehen. In einer vorteilhaften Ausführungsform bilden ein jeweiliger Wälzkörper und zumindest eine der jeweiligen beiden Bahnen einen mechanischen Anschlag zur axialen Sicherung der Komponenten zueinander auf. Beispielsweise weist zumindest einer der Wälzkörper einen zu seiner Wälzachse nach radial-außen weisenden Absatz auf.

Die Eingangsseite und die Ausgangsseite sind hier zur besseren Unterscheidbarkeit definiert. Es ist damit aber keine Richtung eines Drehmomentverlaufs festgelegt. Vielmehr ist ein Drehmoment, bevorzugt ohne Unterschied in Übertragbarkeit eines maximalen Drehmoments, eines maximalen Verdrehwinkels und/oder eines Übersetzungsverhältnisses, in beiden Richtungen in funktional gleicher Weise mittels der Wippenelemente und des Energiespeichers zwischen den beiden Seiten übertragbar. Die Eingangsseite und/oder die Ausgangsseite sind beispielsweise Ring-artig um die zentrale (gemeinsame) Verdrehachse gebildet. Radial-innenseitig (bezogen auf die Verdrehachse) sind die Gegenbahnen und gegebenenfalls Ausbuchtungen für eine relative Bewegbarkeit der anderen Komponenten und/oder zumindest ein Anschlag, beispielsweise zum Unterbinden eines zu großen relativen Verdrehwinkels bei einer Überbeanspruchung, vorgesehen.

Ein solches Wippenelement umfasst (zumindest) eine Rollenbahn zum Aufnehmen eines Wälzkörpers hin zu der Eingangsseite und (zumindest) eine weitere Rollenbahn zum Aufnehmen eines Wälzkörpers hin zu der Ausgangsseite. Weiterhin umfasst das Wippenelement eine Aufnahmefläche für ein Element des Energiespeichers zum Einleiten der Vorspannkraft sowie derjenigen Kraft, welche mittels der Bahnen und Wälzkörper in ein der relativen Verdrehung von der Eingangsseite zur Ausgangsseite entgegenstehendes Drehmoment gewandelt wird. Die Vorspannkraft und die Kraft für das gewünschte (maximal) übertragbare Drehmoment sind zumindest zu einem Teil, bevorzugt insgesamt, in der gleichen Richtung wirkend eingerichtet. Die Bahnen sind derart eingerichtet, dass die Wippenelemente relativ zueinander lediglich eine geringe, bevorzugt keine beziehungsweise eine vernachlässigbare, relative Verkippung erfahren, wenn sich die Eingangsseite und die Ausgangsseite gegeneinander verdrehen. Bei einer Ausführungsform sind (bevorzugt insgesamt ausschließlich) zwei Wippenelemente jeweils einander gegenüberliegend angeordnet und der Energiespeicher dazwischen wird bei einem Verdrehen der beiden Seiten relativ zueinander einzig komprimiert und nicht oder einzig vernachlässigbar relativ zueinander verkippt. Unabhängig von der zuvor erläuterten Ausführungsform ist in einer bevorzugten Ausführungsform die resultierende Kraft auf die Wälzkörper des Pendelwippendämpfers stets senkrecht zu der (in Bahnrichtung ausgerichteten) Tangente der gerade anliegenden Kontaktlinie der jeweiligen Bahn ausgerichtet.

Hier ist vorgeschlagen, dass ein solches Wippenelement jeweils drei separate und axial zueinander versetzt angeordnete Teilbahnen umfasst. Beispielsweise sind von zwei der Teilbahnen eine (einzige) Rollenbahn (beispielsweise die ausgangsseitige) gebildet. Von der dritten Teilbahn ist eine (einzige) zweite Rollenbahn (beispielsweise die eingangsseitige) gebildet. Besonders bevorzugt sind die erste und die zweite Teilbahn axial-außen und die dritte Teilbahn axial zwischen den beiden anderen Teilbahnen angeordnet. In einer besonders bevorzugten Ausführungsform sind den Teilbahnen entsprechende Teilgegenbahnen an den Seiten gebildet, und zwar jeweils zwei Teilgegenbahnen, wo eine (einzige) Teilbahn vorgesehen ist, und jeweils eine (einzige) Teilgegenbahn, wo zwei Teilbahnen vorgesehen sind. Beispielsweise umfasst die Eingangsseite eine eingangsseitige Gegenbahn, welche von einer (einzigen) Teilgegenbahn gebildet ist und mit der eingangsseitigen zweiten Lauffläche des eingangsseitigen Wälzkörpers in abrollendem Kontakt steht. Das Wippenelement umfasst dort eine eingangsseitige Rollenbahn, welche von zwei Teilbahnen gebildet ist und mit den korrespondierenden eingangsseitigen ersten Laufflächen des eingangsseitigen Wälzkörpers in abrollendem Kontakt steht. Für die Ausgangsseite ist es bevorzugt genau umgekehrt, also der ausgangsseitige Wälzkörper axial-zentral an der ausgangsseitigen Rollenbahn des Wippenelements und axial-außen von zwei Teilgegenbahnen an der ausgangsseitigen Gegenbahn der Ausgangsseite abrollend abgestützt.

Bei einem solchen Pendelwippendämpfer ist durch die Wälzkörper die Energie in eine individuell anpassbare Übertragungskennlinie (Drehmoment zu relativem Verdrehwinkel) umgewandelt. Weil ein reines Abrollen und somit keine Reibung im Rollkontakt der Wälzkörper entsteht, ist nahezu keine Hysterese vorhanden. Die Rollenbahnen und komplementären Gegenbahnen ermöglichen baukastenmäßig jede Übertragungskennlinie zu erreichen, ohne den Energiespeicher zu tauschen.

In einer vorteilhaften Ausführungsform ist ein jeder Wälzkörper jeweils in Richtung der Wälzachse außen auf einer gleichseitigen Lauffläche gegen ein Kippmoment quer zu der Wälzachse abgestützt. Eine gleichseitige Lauffläche ist an der Ausgangsseite, an der Eingangsseite oder an dem entsprechenden Wippenelement gebildet. Zwischen den beiden außenseitigen abstützenden Laufflächen ist die (bevorzugt einstückige) andere Lauffläche angeordnet und entsprechend an der antagonistischen Komponente abgestützt, also (in der entsprechenden Reihenfolge wie die vorige Nennung) an dem entsprechenden Wippenelement oder an der Ausgangsseite beziehungsweise Eingangsseite. Wippenelement-seitig ist ein solches Kippmoment bevorzugt von dem Energiespeicher gegengelagert, besonders bevorzugt von dem gleichen Element, welches die Vorspannkraft erzeugt beziehungsweise zu dieser Vorspannkraft beiträgt.

Bei einer bevorzugten Ausführungsform ist der hier vorgeschlagene Pendelwippendämpfer nicht in einer rotierenden Welle eingesetzt, sondern statisch mit einzig einseitigen oder beidseitigen Verdrehausschlägen um die Verdrehachse des Pendelwippendämpfers, wie beispielsweise in einer Fahrzeugaufhängung, beispielsweise einem Wankstabilisator, als Dämpfervorrichtung, einem Klappendämpfer beispielsweise einer Kofferraumklappe oder Motorhaube oder zum Erzeugen einer Rastfunktion für eine Fahrzeugtür.

Es wird weiterhin in einer vorteilhaften Ausführungsform des Pendelwippendämpfers vorgeschlagen, dass die eingangsseitigen Rollenbahnen und die ausgangsseitigen Rollenbahnen an den Wippenelementen jeweils radial-außenseitig angeordnet sind.

Für einen besonders kompakten Aufbau ist das Wippenelement nach radial-außen (also hin zu der jeweiligen Seite und/oder weg von dem Energiespeicher) offen ausgeführt. Die Wälzkörper sind auf die Rollenbahnen von außen, also in einer radialen Richtung bezogen auf ihre jeweilige Wälzachse, auf die zugehörige Rollenbahn aufsetzbar. Nichtsdestotrotz werden in einer Ausführungsform die Wälzkörper bei der Montage axial zu ihrer Wälzachse eingeschoben. Es sei darauf hingewiesen, dass bei dieser Ausführungsform alle vorhandenen Rollenbahnen radial-außenseitig (also weg vom Zentrum des Energiespeichers und/oder des Kräftegleichgewichts und/oder einer Symmetrieachse des Pendelwippendämpfers) angeordnet sind. Es ist keine Rollenbahn innerhalb des Wippenelements oder hin zu dem Energiespeicher weisend angeordnet. Die vorhandenen (komplementären) Gegenbahnen sind somit ebenfalls alle nach radial-innen weisend, bevorzugt radial-innenseitig der Ring-artig gebildeten Seiten angeordnet. Für einen besonders kompakten Aufbau sind auch die Seiten nach radial-innen (also hin zu dem jeweiligen Wippenelement beziehungsweise hin zu dem Energiespeicher) offen ausgeführt. Eine Seite weist bevorzugt eine axiale Erstreckung auf, welche sich von einem (maximalen) Ende der Wälzkörper bis zu einem gegenüberliegenden (maximalen) Ende der Wälzkörper erstreckt oder kürzer ist oder darüber hinausragt. In einer Ausführungsform ist zumindest eine der Seiten axial mit einem weiteren Element verbunden oder einstückig gebildet, welches außerhalb einer axialen Überlappung mit einem der Wälzkörper mit den Wippenelementen und/oder dem Energiespeicher hin zu dem Zentrum (des Energiespeichers und/oder des Kräftegleichgewichts und/oder einer Symmetrieachse) des Pendelwippendämpfers (bei Ring-artigen Seiten in radialer Richtung) überlappt. In einer Ausführungsform ist eine axiale Überlappung auf Höhe eines Wippenelements und/oder eines Energiespeichers einzig in einem Bereich außerhalb der beweglichen Elemente (beziehungsweise deren Bewegungsbahn) gebildet, beispielsweise von einem Verbindungsbolzen zwischen zwei Teilelementen einer der beiden Seiten. Bei Ring-artig gebildeten Seiten bilden die Wippenelemente (beispielsweise als Paar) zwei Kreissegmente innerhalb eines von den Seiten eingeschlossenen Kreises. Innerhalb des eingeschlossenen Kreises abzüglich der Kreissegmente der Wippenelemente ist Bauraum für den Energiespeicher. Dieser Energiespeicher ist bevorzugt derart eingerichtet, dass der zentrale Bauraum (von einer Umhüllenden, beispielsweise Zylinderform bei einer Schraubenfeder mit gerader Federachse) vollständig ausgefüllt ist.

Es wird weiterhin in einer vorteilhaften Ausführungsform des Pendelwippendämpfers vorgeschlagen, dass die Eingangsseite und die Ausgangsseite axial nebeneinander angeordnet sind,
wobei bevorzugt die Eingangsseite und/oder die Ausgangsseite zwei separate Teilelemente umfasst.

Bei dieser Ausführungsform ist eine radial besonders kompakte Bauweise erzielbar. Beispielsweise ist der Außenumfang der Eingangsseite und der Ausgangsseite (etwa oder exakt) gleich. In einer Ausführungsform ist der Innenumfang, also die Ausdehnung hin zu den Wippenelementen, von der Eingangsseite und der Ausgangsseite (etwa oder exakt) gleich, wobei die Anordnung der jeweiligen Gegenbahnen bei einer (bevorzugt) symmetrischen Ausführungsform wegen des gegenläufigen Verdrehwinkels zueinander gespiegelt sind. In einer Ausführungsform sind die Eingangsseite und die Ausgangsseite (gegebenenfalls abgesehen von der Baulänge in axialer Richtung) baugleich. In einer Ausführungsform überlappt die Eingangsseite die Ausgangsseite oder umgekehrt axial, sodass die überlappende Eingangsseite beziehungsweise die Ausgangsseite zu der Verdrehachse gelagert und mit einem solchen axialen Abstand abstützbar ist, welcher (gegebenenfalls etwas weniger als) der Baulänge des Pendelwippendämpfers entspricht. Damit ist eine hohe Steifigkeit gegen ein Kippmoment quer zu der Verdrehachse geschaffen. Bei einer Ausführungsform sind drei oder mehr separate Rollenbahnen auf dem Wippenelement vorgesehen und eine entsprechende Anzahl von separaten Gegenbahnen an den Seiten, sowie separaten Laufflächen an den Wälzkörpern.

In einer vorteilhaften Ausführungsform ist eine der Seiten, beispielsweise die Ausgangsseite, paarig mit zwei separaten Teilelementen gebildet, welche axial benachbart zu der jeweils anderen Seite, dann beispielsweise die Eingangsseite, angeordnet sind. In einer Ausführungsform sind die beiden separaten Teilelemente nicht miteinander verbunden, sondern bilden lediglich funktional gemeinsam die jeweilige Seite, welche ihr über den Getriebezusammenhang von den Wälzkörpern und den Wippenelementen zugeschrieben ist. Die beiden Teilelemente bewegen sich also stets synchron zueinander. Alternativ zu einer separaten Funktionsweise ist radial außerhalb des Kerndurchmessers (in welchem die Wippenelemente angeordnet sind) des Pendelwippendämpfers oder innerhalb dieses Kerndurchmessers eine Verbindung (beispielsweise mittels Abstandsbolzen) zwischen den beiden Teilelementen der betreffenden Seite gebildet. Für geringe relative Verdrehwinkel ist die Ausführungsform mit einer Verbindung innerhalb des Kerndurchmessers vorteilhaft.

Es wird weiterhin in einer vorteilhaften Ausführungsform des Pendelwippendämpfers vorgeschlagen, dass der Energiespeicher zumindest eine Schraubendruckfeder mit einer geraden Federachse umfasst,
wobei bevorzugt die Federachse zwischen den eingangsseitigen Wälzkörpern und den ausgangsseitigen Wälzkörpern verlaufend angeordnet ist.

Diese besonders einfache Ausführungsform erlaubt eine kostengünstige Ausführung und eine geringe Anzahl von separaten Baukomponenten. Die Schraubendruckfeder ist mittels der Wippenelemente zugleich zum Ausüben einer minimalen Vorspannung für die Wälzkörper, einer Abstützung gegen ein Kippmoment quer zu der Verdrehachse des Pendelwippendämpfers sowie (die Hauptfunktion) zum Bereitstellen der gewünschten Gegenkraft gegen ein relatives Verdrehen von der Eingangsseite und der Ausgangsseite gegeneinander eingerichtet ist. In einer bevorzugten Ausführungsform sind zwei Wippenelemente einander diametral gegenüber angeordnet und die eine oder die Mehrzahl von Schraubendruckfedern sind mit ihrer (jeweiligen) Federachse parallel zu dem kürzesten Abstand der beiden Wippenelemente ausgerichtet. Das gebildete Rampengetriebe bewirkt mit einem zunehmenden Verdrehwinkel zwischen der Eingangsseite und der Ausgangsseite eine zunehmende Stauchung der Schraubendruckfeder, womit eine zunehmende (Weg-proportionale) Gegenkraft erzeugt ist. Eine Schraubendruckfeder weist eine geringe Energiedissipation auf und ist einfach gegen eine Überlastung auslegbar, beispielsweise sicher gegen Bruch bis zu einer Auf-Block-Belastung ausgelegt und/oder der maximale Federweg mittels eines Anschlags (beispielsweise an den Wippenelementen) begrenzt. Eine Schraubendruckfeder ist zudem mit einer (beispielsweise im Vergleich zu einem gummi-elastischen Materialblock) sehr genau eingestellten Weg-Kraft-Kennlinie kostengünstig herstellbar beziehungsweise als Normteil am Markt verfügbar und unterliegt über eine ausreichend lange Lebensdauer keiner zu berücksichtigenden Alterungserscheinung. Eine Grenzbelastung für eine Schraubendruckfeder ist auch einfach konstruktiv zu berücksichtigen, beispielsweise mit einem maximalen Federweg bis zu einer Auf-Block-Belastung.

In einer vorteilhaften Ausführungsform ist die Federachse der zumindest einen Schraubendruckfeder zwischen den (beispielsweise zwei) Wälzkörpern des jeweiligen Wippenelements, bevorzugt etwa (beispielsweise um nicht mehr als 3 mm [drei Millimeter] Abweichung) oder exakt mittig, besonders bevorzugt die Verdrehachse schneidend oder mit geringem Versatz (von beispielsweise maximal ±0,5 mm [plus/minus einem halben Millimeter]), angeordnet. In einer Ausführungsform sind zwei oder mehr Schraubendruckfedern ineinander geschachtelt angeordnet, beispielsweise mit gleicher Federachse, wobei bevorzugt eine der beiden Schraubendruckfedern die jeweils andere Schraubendruckfeder führt und einzig eine der beiden Schraubendruckfedern quer zu der Federachse gelagert ist. In einer Ausführungsform ist eine der Schraubendruckfedern mit seiner entspannten Länge kürzer als der kürzeste Abstand (bei einem Verdrehwinkel von null) der gegeneinander mittels des Energiespeichers gegeneinander abgestützten Wippenelemente. Erst bei einem vorbestimmten Verdrehwinkel der beiden Seiten gegeneinander werden beide Wippenelemente mit dieser (kurzen) Schraubendruckfeder in kraftübertragenden Kontakt gebracht. Damit ist zusätzlich eine (gestufter) Steifigkeitszuwachs über die Übertragungskennlinie des Pendelwippendämpfers geschaffen und/oder eine Sicherheit gegen eine Auf-Block-Belastung beziehungsweise Überlastung der anderen (langen und dauerhaft in kraftübertragendem Kontakt stehenden) Schraubendruckfeder gebildet. Eine solche kurze Schraubendruckfeder ist auch mit einer anderen Ausführungsform eines Energiespeicherelements kombinierbar.

Ein Pendelwippendämpfer mit zumindest einer Schraubendruckfeder als Energiespeicher in Zentralposition ermöglicht eine hohe Drahtdicke, was eine sehr hohe Energiemenge bedeutet. Diese Energiemenge ist durch die Wälzkörper in eine individuell anpassbare Übertragungskennlinie umgewandelt. Weil ein reines Abrollen und somit keine Reibung im Rollkontakt entsteht, ist nahezu keine Hysterese vorhanden. Die Steifigkeit der Schraubendruckfeder streut sehr wenig. Damit ist eine hohe Qualität der Isolation über die Lebensdauer gewährleistet. Die Rollenbahnen und komplementären Gegenbahnen ermöglichen baukastenmäßig jede Kennlinie zu erreichen, ohne die Schraubendruckfeder zu tauschen.

Es wird weiterhin in einer vorteilhaften Ausführungsform des Pendelwippendämpfers vorgeschlagen, dass ein Drahtdurchmesser zumindest einer der Schraubendruckfedern um weniger als 20 % von einem Rollendurchmesser der Wälzkörper bei einer Lauffläche abweicht, bevorzugt der Drahtdurchmesser um mehr als 5 % größer als der Rollendurchmesser ist,
wobei bevorzugt der Drahtdurchmesser größer als 5 mm ist und der Kerndurchmesser, welcher von dem Außenumfang der Wippenelemente gebildet ist, kleiner als 80 mm ist, bevorzugt kleiner als 40 mm ist.

Der hier vorgeschlagene Pendelwippendämpfer weist eine Schraubendruckfeder mit einer sehr hohen Steifigkeit im Vergleich zu seiner Gesamtabmessung beziehungsweise seines übertragbaren Drehmoments auf. In einer bevorzugten Ausführungsform ist die Schraubendruckfeder bei einem (auslegungsgemäß) maximal übertragbaren Drehmoment das einzige kraftübertragende Element, also keine parallele Struktur (wie beispielsweise ein Anschlag und/oder ein zusätzliches Energiespeicherelement) vorgesehen. Beispielsweise ist ein maximales Drehmoment von 1,5 kNm [anderthalb Kilo-Newtonmeter] über die Schraubendruckfeder übertragbar, wobei dabei eine maximale Federkraft von beispielsweise 5 kN [fünf Kilo-Newton] bis 30 kN an der Schraubendruckfeder anliegt und die Schraubendruckfeder noch freie Federweg-Kapazitäten aufweist, also nicht auf Block belastet ist.

In einer vorteilhaften Ausführungsform ist der Kerndurchmesser des Pendelwippendämpfers kleiner als 80 mm [achtzig Millimeter], bevorzugt kleiner als 40 mm. Der Außendurchmesser des Pendelwippendämpfers oder der hier beschriebenen Komponenten ist bevorzugt kleiner als 100 mm, beispielsweise etwa 60 mm. Der Kerndurchmesser ist von dem Außenumfang der Wippenelemente in der Einbausituation definiert, wobei der Kerndurchmesser dem Durchmesser eines Kreises um die Verdrehachse entspricht, welcher tangential zu der maximalen radialen Ausdehnung (nach außen) der Wippenelemente angeordnet ist. Alternativ ist der Kerndurchmesser der Durchmesser von einem Kreis durch die Wälzachsen der radial-äußersten (beispielsweise aller) Wälzkörper in der Einbausituation. Die Einbausituation ist ein Zustand ohne Verdrehwinkel zwischen der Eingangsseite und der Ausgangsseite. Der Drahtdurchmesser zumindest einer der Schraubendruckfeder ist dann bevorzugt größer als 5 mm [fünf Millimeter], besonders bevorzugt beträgt der Drahtdurchmesser etwa 10 mm. Ein Rollendurchmesser der Wälzkörper beträgt dann beispielsweise 9,5 mm bei -5 % [minus fünf Prozent] Abweichung zu dem Drahtdurchmesser. In einer Ausführungsform ist die axiale Baulänge des Pendelwippendämpfers kleiner als 100 mm [ein hundert Millimeter], bevorzugt etwa 50 mm. Die Wälzkörper sind axial bevorzugt genauso lang wie oder etwas kürzer als die axiale Baulänge des Pendelwippendämpfers.

Es wird weiterhin in einer vorteilhaften Ausführungsform des Pendelwippendämpfers vorgeschlagen, dass zumindest eines der Wippenelemente eine Vertiefung in seiner Aufnahmefläche zum Aufnehmen zumindest einer, bevorzugt der inneren, der Schraubendruckfedern aufweist.

Mittels der Vertiefung ist eine sichere Führung der Schraubendruckfedern erzeugt. Die Vertiefung erlaubt im Gegensatz zu einer Nase eine längere Ausführung der aufzunehmenden Schraubendruckfeder und damit eine größere Federweg-Kapazität und/oder Federsteifigkeit. Die Vertiefung ist zudem vorteilhaft bei einer Fertigung des Wippenelements mittels Gießen beziehungsweise Sintern für ein sicheres Abformen. In einer bevorzugten Ausführungsform ist einzig die innere (beziehungsweise innerste) Schraubendruckfeder mittels der Vertiefung aufgenommen. Bevorzugt ist die (eine oder Mehrzahl von) anderen Schraubendruckfedern einzig von der mittels der Vertiefung geführten Schraubendruckfeder geführt. In einer Ausführungsform sind die Schraubendruckfedern derart ausgeführt, dass sie einander bei auslegungsgemäßer Funktion nie berühren. Alternativ berühren sie sich erst bei einer Grenzbelastung, beispielsweise bei Auf-Block-Belastung von zumindest einer der Schraubendruckfedern. In einer Ausführungsform ist eine Reibung zwischen den Schraubendruckfedern ab einer vorbestimmten Belastung erwünscht, sodass eine Energiedissipation auftritt. Diese Energiedissipation tritt bevorzugt nur im äußeren Grenzbereich der relativen Verdrehwinkel auf und nicht bei einem Nulldurchgang. Im Nulldurchgang ist somit die Hysterese (nahezu) null. Gleichwohl ist eine Sicherheitsgrenze und/oder eine Erhöhung der Gegenkraft beziehungsweise des Gegenmoments bei einem (im Vergleich zu dem auslegungsgemäß maximalen Verdrehwinkel) großen Verdrehwinkel erzeugbar.

Es wird weiterhin in einer vorteilhaften Ausführungsform des Pendelwippendämpfers vorgeschlagen, dass ein maximaler relativer Verdrehwinkel zwischen der Eingangsseite und der Ausgangsseite weniger als 10°, bevorzugt weniger als 5°, beträgt.

Während bei vorbekannten Pendelwippendämpfern für den Einsatz in einem Antriebsstrang in einem rotierenden Wellensystem maximale Verdrehwinkel von ±20° [plus/minus zwanzig Grad von 360°] bis ±30° bei einer geringen Steifigkeit von 200 Nm [zweihundert Newtonmeter] bis 300 Nm erforderlich sind, ist hier eine sehr hohe Steifigkeit (wie bereits oben genannt) von etwa 1,5 kNm bei geringem Verdrehwinkel von bevorzugt weniger als ±10° [plus/minus zehn Grad], oder sogar weniger als ±5°, beispielsweise ±3° bis ±4°. Ein solcher Pendelwippendämpfer ist beispielsweise für einen Wankstabilisator ohne weitere Maßnahmen als einzige Dämpfervorrichtung in dem Drehmomentfluss einsetzbar. Je nach Bauraum und Masse beziehungsweise Kräften an einem solchen Wankstabilisator sind andere Werte erzielbar. Darüber hinaus ist eine Übersetzungskurve (nahezu) frei von Hysterese-Eigenschaften erzielbar, sodass beispielsweise für geringe Verdrehwinkel (beispielsweise in einem Kraftfahrzeug bei Überfahren einer unebenen Fahrbahn) eine eindeutige und beispielsweise weiche Übertragungskennlinie vorliegt und für große Verdrehwinkel eine eindeutige und beispielsweise harte Übertragungskennlinie vorliegt (beispielsweise in einem Kraftfahrzeug bei Kurvenfahrt mit hoher Querbeschleunigung). Bei einem Schlagloch tritt ein geringes Drehmoment an dem Wankstabilisator auf, weil lediglich das Gewicht des Radaufbaus zum Tragen kommt. Diese werden dann mit der geringen Steifigkeit der Übertragungskennlinie (entsprechend dem geringen Drehmoment) nicht oder stark gedämpft an das jeweils andere Rad der Radachse weitergegeben. Bei einer Kurvenfahrt wird die gesamte Fahrzeugmasse nach Kurven-außen (quer-) beschleunigt, sodass dann deutlich höhere Drehmomente an dem Wankstabilisator auftreten. Diese werden dann mit der hohen Steifigkeit der Übertragungskennlinie (entsprechend dem hohen Drehmoment) an das andere Rad weitergegeben.

Es wird weiterhin in einer vorteilhaften Ausführungsform des Pendelwippendämpfers vorgeschlagen, dass mittels der Rollenbahnen und der Gegenbahnen bei einem auslegungsgemäß maximalen relativen Verdrehwinkel zwischen der Eingangsseite und der Ausgangsseite ein maximaler Federweg des Energiespeichers von etwa 1 mm bis 10 mm, bevorzugt bis maximal 6 mm, bewirkt ist.

Der Federweg des Energiespeichers sollte möglichst gering sein, um so eine hohe Kompaktheit des Pendelwippendämpfers erreichen zu können. Für einige Anwendungsfälle ist zudem eine hohe (maximale) Steifigkeit des Pendelwippendämpfers bei gleichzeitig einem geringen maximalen Verdrehwinkel (wie beispielsweise vorhergehend genannt) erforderlich. Aufgrund der Bahnen für die Wälzkörper, also das Rampengetriebe, ist ein solcher Zusammenhang erzielbar und zudem mit einer jeweils erforderlichen Kennlinie individuell an die Bedürfnisse anpassbar. In einer vorteilhaften Ausführungsform ist ein stets baugleicher oder wenig veränderter Energiespeicher für unterschiedliche Übertragungskennlinien einsetzbar. Es ist lediglich die Geometrie des Rampengetriebes anzupassen. Alternativ ist einzig der Energiespeicher auszuwechseln, um eine gewünschte Übertragungskennlinie mit gleichen Eigenschaften aber anderen Kräften beziehungsweise Drehmomenten zu erzielen. Besonders bevorzugt ist der erforderliche Bauraum stets gleich mit gegebenenfalls notwendigen Änderungen an dem Energiespeicher und/oder dem Rampengetriebe. Damit ist der Pendelwippendämpfer für eine Vielzahl unterschiedlicher Fahrzeuge mit unterschiedlichen Massen und/oder im Laufe der Entwicklung noch eine nachträgliche Anpassung ohne größeren Aufwand möglich, sowie für viele unterschiedliche Anwendungen einsetzbar.

Vorzugsweise wird ein Wankstabilisator für eine Radachse eines Kraftfahrzeugs vorgeschlagen, aufweisend zumindest die folgenden Komponenten:
- zumindest einen Radfederanschluss;
- zumindest einen Pendelwippendämpfer, bevorzugt nach einer Ausführungsform gemäß der obigen Beschreibung,

wobei der zumindest eine Radfederanschluss mit dem Pendelwippendämpfer drehmomentübertragend verbunden ist,
wobei der Pendelwippendämpfer eine Eingangsseite, eine Ausgangsseite, eine Mehrzahl von Wippenelementen, eine korrespondierende Anzahl von Wälzkörpern und einen Energiespeicher umfasst, wobei die Wälzkörper zwischen Rollenbahnen der Wippenelemente und Gegenbahnen der Eingangsseite beziehungsweise Ausgangsseite mittels des Energiespeichers abrollbar eingespannt sind,
wobei bevorzugt weiterhin ein Aktuator, und besonders bevorzugt ein mehrstufiges Planetengetriebe im Drehmomentfluss zwischen dem Aktuator und dem Pendelwippendämpfer, vorgesehen ist, wobei der zumindest eine Radfederanschluss mittels des Pendelwippendämpfers mit dem Aktuator drehmomentübertragend verbunden ist.

Ein Wankstabilisator in einer klassischen Ausführungsform ist zwischen einer ersten Radfeder, beispielsweise verbunden über einen ersten Drehstab, und einer zweiten Radfeder, beispielsweise verbunden über einen zweiten Drehstab, angeordnet und zum Modulieren der Übertragung einer Einfederkraft beziehungsweise Ausfederkraft der beiden Räder einer (gemeinsamen) Radachse eingerichtet, beispielsweise mit einem MacPherson-Federbein an einer (bevorzugt gelenkten) Vorderachse. Die Federbeine beziehungsweise Drehstäbe sind jeweils mit der Radaufnahme für ein Rad der gemeinsamen Radachse kraftübertragend verbunden. In einer nicht modulierten und passiven Ausführungsform eines Wankstabilisators sind die beiden Drehstäbe miteinander verbunden beziehungsweise einstückig gebildet. Bei dem hier beschriebenen Wankstabilisator ist eine Drehmomentübertragung von einer Radfeder zu der anderen Radfeder mittels des jeweiligen Radfederanschlusses über den Pendelwippendämpfer geleitet. Der Pendelwippendämpfer ist für eine Dämpfung beziehungsweise Unterdrückung der Übertragung von Auf- und Ab-Bewegungen eines der beiden Räder (beispielsweise aufgrund von Bodenunebenheiten) auf das jeweils andere Rad der gemeinsamen Radachse zwischengeschaltet.

Bei einer aktiven Ausführungsform des Wankstabilisators ist weiterhin ein Aktuator vorgesehen. Der Aktuator ist beispielsweise eine elektrische Maschine. Der Aktuator ist bevorzugt von außerhalb des Wankstabilisators, beispielsweise von dem Bordnetz eines Kraftfahrzeugs, mit der benötigten Leistungsspannung versorgt. In einer Ausführungsform ist die Steuerung und/oder die benötigte Sensorik für den Aktuator in den Wankstabilisator integriert. In einer Ausführungsform ist jeweils ein separater Wankstabilisator pro Rad vorgesehen, sodass auch jeweils nur ein Radfederanschluss vorgesehen ist. Dieser Radfederanschluss ist mittels des Pendelwippendämpfers mit dem Aktuator verbunden. Ein Einfedern oder Ausfedern des drehmomentübertragend angeschlossenen Rads ist von einer Sensorik registriert. Die ermittelten Werte werden rein elektronisch an den Aktuator des jeweils anderen Wankstabilisators der gemeinsamen Radachse übermittelt und von dem dortigen Aktuator ein Drehmoment zum Übertragen an den dortigen Radfederanschluss erzeugt.

Für ein gutes Ansprechverhalten sowie zur Reduktion von Klappergeräuschen in dem Wankstabilisator ist der Einsatz eines Pendelwippendämpfers besonders vorteilhaft, welcher die gewünschte Dämpfung mittels seines Rampengetriebes bewirkt. Klappergeräusche führen bei dem Fahrzeugfahrer gerade in der Situation von Bodenunebenheiten, welche diese Geräusche auslösen können, zu einer Verunsicherung. Bevorzugt ist der Pendelwippendämpfer die einzige Dämpfervorrichtung in dem Drehmomentfluss zwischen den beiden Radfederanschlüssen beziehungsweise zwischen dem Aktuator und dem Radfederanschluss beziehungsweise den Radfederanschlüssen. Der Pendelwippendämpfer ist frei von einem gummi-elastischen Dämpferelement gebildet. Der Pendelwippendämpfer umfasst eine Mehrzahl von Wippenelementen, eine korrespondierende Anzahl von Wälzkörpern und einen Energiespeicher, wobei von den Wippenelementen zu der Eingangsseite und/oder der Ausgangsseite ein Rampengetriebe gebildet ist. Das gegen ein Verdrehen der Eingangsseite gegen die Ausgangsseite gerichtete Drehmoment ist von dem Energiespeicher aufgebracht, welcher bevorzugt zumindest eine Schraubendruckfeder umfasst, besonders bevorzugt einzig die zumindest eine Schraubendruckfeder umfasst. Die Wälzkörper sind zwischen Rollenbahnen der Wippenelemente und Gegenbahnen der Eingangsseite beziehungsweise Ausgangsseite mittels des Energiespeichers abrollbar eingespannt. Der Pendelwippendämpfer ist beispielsweise wie eine Ausführungsform der eingangs genannten vorbekannten Pendelwippendämpfer ausgeführt. Der Pendelwippendämpfer ist derart ausführbar, dass eine Hysterese-Eigenschaft gering bis vernachlässigbar ist. Die Entstehung von Klappergeräuschen in dem Wankstabilisator ist damit effektiv vermeidbar oder ausreichend stark reduzierbar. In einer bevorzugt Ausführungsform ist der Pendelwippendämpfer nach einer Ausführungsform gemäß der obigen Beschreibung ausgeführt. Letzterer hat den Vorteil besonders kompakt zu bauen, bevorzugt einen geringeren Bauraum zu benötigen als vorbekannte gummi-elastische Dämpfervorrichtungen, welche bei konventionellen Wankstabilisatoren im Einsatz sind. Zudem ist ein solcher Pendelwippendämpfer kostengünstig herstellbar und flexibel an unterschiedlichste Anforderungen anpassbar, ohne dass dafür der benötigte Bauraum verändert werden muss.

In einer vorteilhaften Ausführungsform ist im Drehmomentfluss in einem aktiven Wankstabilisator zwischen dem Aktuator und dem Pendelwippendämpfer ein mehrstufiges Planetengetriebe zwischengeschaltet. Damit ist ein kostengünstiger und klein bauender Aktuator einsetzbar, welcher für ein (zu) geringes maximales Drehmoment für die (übersetzungsfreie) Anwendung in einem Wankstabilisator aufweist. Das mehrstufige Planetengetriebe ermöglicht ein enormes Übersetzungsverhältnis auf geringstem Bauraum. In einer Ausführungsform ist ein dreistufiges Planetengetriebe vorgesehen.

Weiterhin vorzugsweise wird ein Kraftfahrzeug vorgeschlagen, aufweisend eine Antriebsmaschine, zumindest eine Radachse und an zumindest einer der Radachsen zumindest einen Wankstabilisator nach einer Ausführungsform gemäß der obigen Beschreibung.

Der Masse von Kraftfahrzeugen ist zunehmend problematisch, sowohl bei den sogenannten Sport-Utility-Vehicles [SUV] als auch bei den elektrifizierten Kraftfahrzeugen mit einer großen Traktionsbatterie. Zudem ist die Forderung nach hoher Fahrsicherheit erhöht, welche beispielsweise eine gute Wankstabilisation auf befestigten Straßen für eine präzise Kurvenführung und für einen hohen Fahrkomfort (und damit einem erhöhten Sicherheitsgefühl) umfasst. Gleichzeitig ist aufgrund der Komplexität heutiger Kraftfahrzeuge und dem zunehmenden Unverständnis für die Vorgänge in dem Kraftfahrzeug während der Fahrt bei Fahrzeugfahrern die Empfindlichkeit gegen die Entstehung von (unbekannten) Geräuschen hoch.

In dem hier vorgeschlagenen Kraftfahrzeug ist ein aktiver Wankstabilisator mit einem kompakten Pendelwippendämpfer und einem klapperfreien Betrieb in allen Betriebszuständen vorgeschlagen. Der Wankstabilisator ist in gleicher oder geringerer Baugröße im Vergleich zu einem vorbekannten Wankstabilisator mit einer gummi-elastischen Dämpfervorrichtung ausführbar und somit ersatzweise für einen vorbekannten Wankstabilisator in dem Kraftfahrzeug einsetzbar, beispielsweise auch in einem Wartungszyklus austauschbar, sofern mit dem konventionellen Wankstabilisator Probleme entstehen, beispielsweise aufgrund von Alterungserscheinungen.

Personenkraftwagen werden einer Fahrzeugklasse nach beispielsweise Größe, Preis, Gewicht und Leistung zugeordnet, wobei diese Definition einem steten Wandel nach den Bedürfnissen des Marktes unterliegt. Im US-Markt werden Fahrzeuge der Klasse J (SUV) nach europäischer Klassifizierung der Klasse der Mini SUV bis fullsize SUV zugeordnet und im britischen Markt entsprechen sie der Klasse 4x4 beziehungsweise der Klasse Coupé SUV. Beispiele Mini SUV sind der Dacia Duster und der Opel Mokka. Beispiele der Large 4x4 sind der Porsche Cayenne, die Mercedes-Benz M-Klasse und der Ford Explorer. Ein bekannter rein elektrischer SUV ist der Tesla Model X.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die Zeichnungen nicht maßhaltig sind und zur Definition von Größenverhältnissen nicht geeignet sind. Es wird dargestellt in
- Fig. 1:: ein Pendelwippendämpfer in Vorderansicht;
- Fig. 2:: der Pendelwippendämpfer nach Fig. 1 in Schnittansicht;
- Fig. 3:: eine Explosionsdarstellung des Pendelwippendämpfers nach Fig. 1 und Fig. 2;
- Fig. 4:: eine erzielbare Übertragungskennlinie;
- Fig. 5:: ein aktiver Wankstabilisator mit einem Pendelwippendämpfer nach Fig. 1 bis Fig. 3; und
- Fig. 6:: ein Kraftfahrzeug mit zwei Wankstabilisatoren.

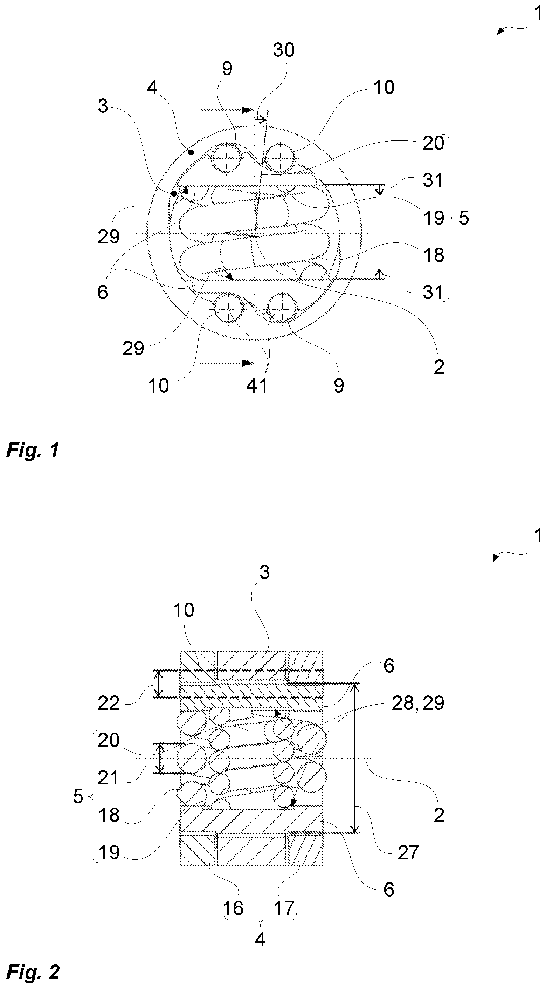

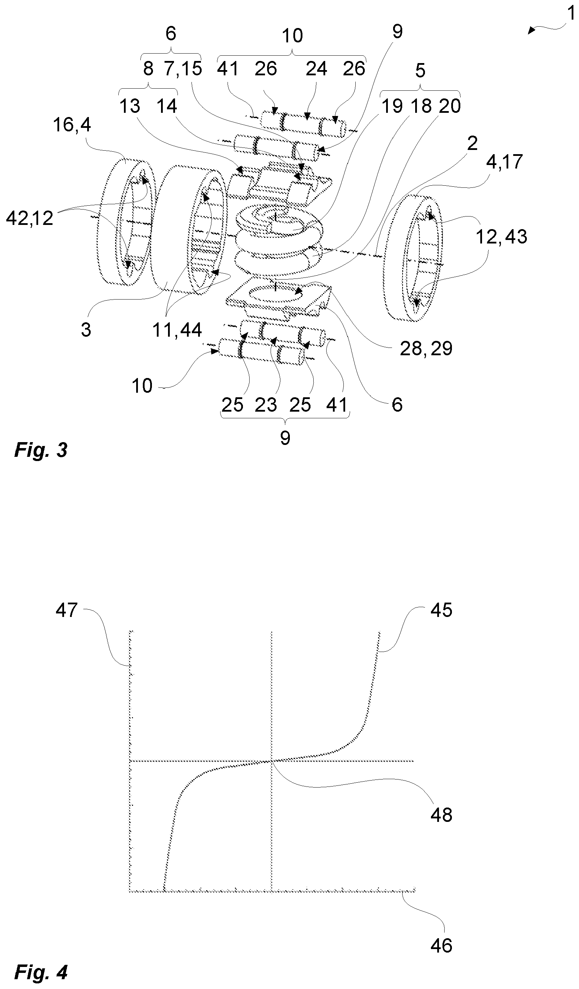

In Fig. 1 ist ein Pendelwippendämpfer **1** in Vorderansicht, mittels welchem ein Verdrehwinkel **30** um die zentrale Verdrehachse **2** zwischen einer (hier ringartigen) Eingangsseite **3** (hier verdeckt, vergleiche Fig. 2 und Fig. 3) und einer (hier ebenfalls ringartigen) Ausgangsseite **4** um eine zentrale Verdrehachse **2** in einen geraden Federweg **31** entlang der Federachse **20** umgewandelt wird. Dies ist mittels eines Rampengetriebes bewerkstelligt, welches bei dieser Ausführungsform von zwei einander diametral gegenüberliegenden Wippenelementen **6** beziehungsweise mittels deren Rollenbahnen **7,8,** Gegenbahnen **11,12** (der Eingangsseite **3** und Ausgangsseite **4)** und den dazwischen angeordneten Wälzkörpern **9,10** gebildet ist (vergleiche dazu Fig. 3). Die Rollenbahnen **7,8** der Wippenelemente **6** weisen nach radial außen und bei dieser Ausführungsform sind die Eingangsseite **3** und die Ausgangsseite **4** radial-außen zu den Wippenelementen **6** angeordnet. Es sei darauf hingewiesen, dass infolge eines Verdrehwinkels **30** (ungleich null) zwischen der Eingangsseite **3** und der Ausgangsseite **4** die Wippenelemente **6** aus der gezeigten Ruhelage relativ zu den Seiten **3,4** verkippen. Die Wippenelemente **6** bleiben aber (zumindest nahezu) entlang der Federachse **20** gleich, also senkrecht dazu, zueinander ausgerichtet beziehungsweise beschreiben einen leichten seitlichen Versatz der Aufnahmeflächen **29** zueinander. Die Wippenelemente **6** bewegen sich, wie mit den angedeuteten Federwegen **31** gezeigt, bei einem anliegenden Verdrehwinkel **30** (ungleich null) aufeinander zu.

Die Wälzkörper **9,10** sind mittels des Energiespeichers **5** an ihre jeweilige Rollenbahn **7,8** und ihre jeweilige Gegenbahn **11,12** angepresst, und zwar derart, dass ausschließlich eine Abrollbewegung als relative Bewegung zwischen dem jeweiligen Wälzkörper **9,10** und dem Wippenelement **6** sowie der betreffenden Seite **3,4** möglich ist. Eine rutschende Bewegung ohne Rotation um die Wälzachse **41** (hier der Übersichtlichkeit halber einzig bei den darstellungsgemäß unteren Wälzkörpern **9,10** bezeichnet) des jeweiligen Wälzkörpers **9,10** ist im auslegungsgemäßen Betrieb des Pendelwippendämpfers **1** ausgeschlossen. Der Energiespeicher **5** umfasst in dieser Ausführungsform eine äußere Schraubendruckfeder **18** und eine innere Schraubendruckfeder **19,** welche eine gemeinsame Federachse **20** aufweisen. Die Federachse **20** ist senkrecht zu den Aufnahmeflächen **29** der Wippenelemente **6** angeordnet und die Vorspannkraft der Schraubendruckfedern **18,19** somit senkrecht in die Wippenelemente **6** geleitet. Die Federachse **20** schneidet die Verdrehachse **2** oder ist leicht zu der Verdrehachse **2** versetzt angeordnet. Die Vorspannkraft des Energiespeichers **5** wird dann über die jeweiligen Rollenbahnen **7,8** auf den zugeordneten Wälzkörper **9,10** und von diesem wiederum in die zugeordnete Gegenbahn **11,12** der betreffenden Seite **3,4** eingeleitet. Dabei ist in einer bevorzugten Ausführungsform ein solches stabiles Kräfteverhältnis geschaffen, dass die Kraft auf einen Wälzkörper **9,10** jeweils (zumindest etwa) senkrecht zu der Tangente (in Bahnrichtung) der aktuellen Kontaktlinie mit der jeweiligen Bahn **7,8,11,12** ausgerichtet ist. Die Kraft verläuft dann diametral (also die Wälzachse **41** schneidend) durch den Wälzkörper **9,10.**

In Fig. 2 ist der Pendelwippendämpfer **1** nach Fig. 1 in einer Schnittansicht gezeigt, wie sie dort gekennzeichnet ist. In der Darstellung oben ist mit gestrichelter Linie vereinfacht der (ausgangsseitige) Wälzkörper **10** eingezeichnet, gegenüberliegend (unten) ist ein (eingangsseitiger) Wälzkörper **9** hauptsächlich verdeckt und daher hier nicht bezeichnet (vergleiche Fig. 1). Hier ist gut zu erkennen, wie die beiden Schraubendruckfedern **18,19** mit gemeinsamer Federachse **20** ineinander zwischen den Aufnahmeflächen **29** der Wippenelemente **6** angeordnet und so zum Erzeugen der Vorspannkraft sowie des der relativen Verdrehung entgegenstehenden Drehmoments eingespannt sind. Der Drahtdurchmesser **21** der äußeren Schraubendruckfeder **18** ist leicht größer als der (wirksame) Rollendurchmesser **22** der Wälzkörper **9,10.** Radial-außen sind die Seiten **3,4** angeordnet, welche hier ringartig als (einstückige) Eingangsseite **3** in der axialen Mitte und als Ausgangsseite **4** mit einem ersten Teilelement **16** und einem zweiten Teilelement **17** jeweils axial benachbart zu der Eingangsseite **3** gebildet sind. Ein Drehmoment, welches über die Eingangsseite **3** eingetragen wird, läuft über die eingangsseitigen Wälzkörper **9,** über die Wippenelemente **6** und wieder über die ausgangsseitigen Wälzkörper **10** an die Ausgangsseite **4.** Einer auf diese Weise erzeugten (Wipp-) Bewegung der Wippenelemente **6** steht die Federkraft des Energiespeichers **5** entgegen (vergleiche Federweg **31** in Fig. 1). Zum Führen beziehungsweise Halten gegen Querkräfte der Schraubendruckfedern **18,19** ist bei dieser vorteilhaften Ausführungsform (optional) eine Vertiefung **28** in den Aufnahmeflächen **29** der Wippenelemente **6** vorgesehen. In diesen Vertiefungen **28** ist jeweils ein Ende der inneren Schraubendruckfeder **19** aufgenommen. Die innere Schraubendruckfeder **19** führt über ihren Zylinderaußenumfang die äußere Schraubendruckfeder **18.** Radialinnerhalb der ringartigen Seiten **3,4** ist ein Kerndurchmesser **27** gebildet, welcher dem (maximalen) Außenumfang der Wippenelemente **6** in der gezeigten Einbausituation entspricht. Der Kerndurchmesser **27** ist sehr klein (misst beispielsweise etwa 40 mm [vierzig Millimeter]) und dennoch ist ein der relativen Verdrehung der Eingangsseite **3** zur Ausgangsseite **4** um die Verdrehachse **2** ein maximales Drehmoment von 1,5 kNm [anderthalb Kilo-Newtonmeter] oder mehr erreichbar. Bevorzugt ist der (auslegungsgemäß) maximale Verdrehwinkel **30** kleiner als ±6° [plus/minus sechs Grad].

In Fig. 3 ist eine Explosionsdarstellung des Pendelwippendämpfers **1** nach Fig. 1 und Fig. 2 gezeigt. Zusätzlich zu den bereits erläuterten Komponenten des Pendelwippendämpfers **1** sind hier die Bahnen gut zu erkennen:
- An dem (darstellungsgemäß) oberen Wippenelement **6** ist vorne eine zweiteilige ausgangsseitige Rollenbahn **8** und hinten eine axial-zentrale eingangsseitige Rollenbahn **7** zu erkennen. Gleiches gilt für das untere Wippenelement **6,** welches um die Verdrehachse **2** gedreht ist, bevorzugt identisch mit dem oberen Wippenelement **6** ist. Die ausgangsseitigen Rollenbahnen **8** sind also jeweils von der erste Teilbahn **13** und der zweiten Teilbahn **14** gebildet, welche axial-außen angeordnet sind. Die eingangsseitigen Rollenbahnen **7** sind jeweils von der dritten Teilbahn **15** gebildet, welche axial-zentral zwischen den anderen beiden erste Teilbahnen **13,14** angeordnet ist.
- An der axial-zentralen Eingangsseite **3** sind zwei einander gegenüberliegenden (eingangsseitige) Gegenbahnen **11** zu erkennen. Die eingangsseitigen Gegenbahnen **11** sind also jeweils von einer (axial-zentralen) dritten Teilgegenbahn **44** gebildet.
- An der zweiteiligen Ausgangsseite **4** ist an jedem Teilelement **16,17** jeweils zwei einander gegenüberliegende (ausgangsseitige) Gegenbahnen **11,12** zu erkennen. Die ausgangsseitigen Gegenbahnen **12** sind also jeweils von einer ersten Teilgegenbahn **42** (an dem ersten Teilelement **16** der Ausgangsseite **4)** und einer zweiten Teilgegenbahn **43** (an dem zweiten Teilelement **17** der Ausgangsseite **4)** gebildet, und zwar axial-außen relativ zu der dritten Teilgegenbahn **44.**

Und zudem sind an den Wälzkörpern **9,10** die korrespondierenden Laufflächen zu erkennen:
- An dem eingangsseitigen Wälzkörper **9** (darstellungsgemäß oben der vordere und unten der hintere) ist axial-zentral die eingangsseitige zweite Lauffläche **25** zum Abrollen auf der eingangsseitigen Gegenbahn **11** (dritte Teilgegenbahn **44)** und axial-außen jeweils eine eingangsseitige erste Lauffläche **23** zum Abrollen auf der eingangsseitigen Rollenbahn **7** (erste Teilbahn **13** und zweite Teilbahn **14)** zu erkennen. Rein optional sind hier die (eingangsseitigen) Laufflächen **23,25** des eingangsseitigen Wälzkörpers **9** mittels eines Absatzes voneinander separiert, womit eine axiale Lagerung beziehungsweise Sicherung geschaffen ist.
- An dem ausgangsseitigen Wälzkörper **10** (darstellungsgemäß unten der vordere und oben der hintere) ist axial-zentral die ausgangsseitige erste Lauffläche **24** zum Abrollen auf der ausgangsseitigen Rollenbahn **8** (dritte Teilbahn **15)** und axial-außen jeweils eine ausgangsseitige zweite Lauffläche **26** zum Abrollen auf der ausgangsseitigen Gegenbahn **12** (erste Teilgegenbahn **42** und zweite Teilgegenbahn **43)** zu erkennen. Rein optional sind hier auch die (ausgangsseitigen) Laufflächen **24,26** des ausgangsseitigen Wälzkörpers **10** mittels eines Absatzes voneinander separiert, womit eine axiale Lagerung beziehungsweise Sicherung geschaffen ist.

Weiterhin ist hier in Fig. 3 die Vertiefung **28** in der Aufnahmefläche **29** des darstellungsgemäß unteren Wippenelements **6** gut zu erkennen. Wie bereits in Fig. 2 zu erkennen, ist bei dieser vorteilhaften Ausführungsform die Vertiefung **28** allein zum Aufnehmen der inneren Schraubendruckfeder **19** eingerichtet und der Bereich der Aufnahmefläche **29** um die Vertiefung **28** herum allein zum Aufnehmen der äußeren Schraubendruckfeder **18** eingerichtet.

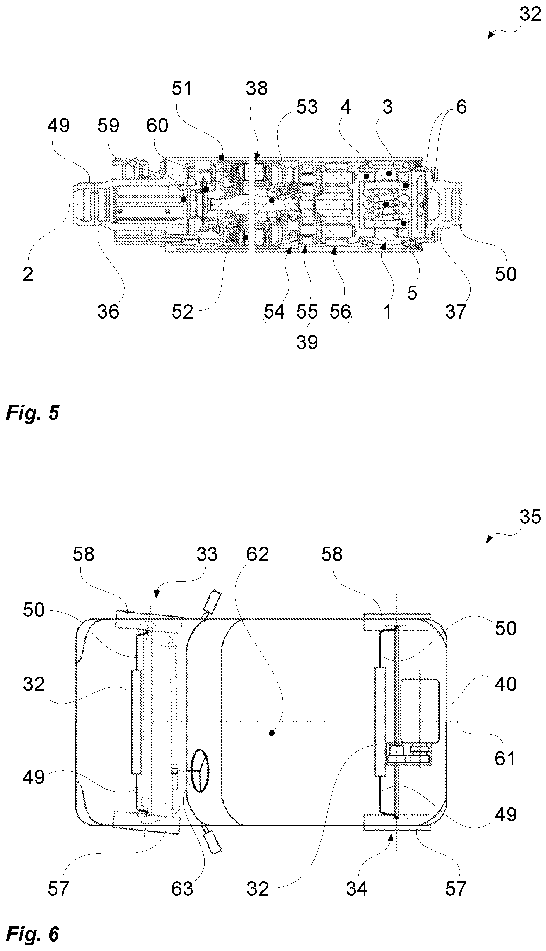

In Fig. 4 ist eine mittels eines Pendelwippendämpfers **1** (beispielsweise wie in einer der Fig. 1 bis Fig. 3 gezeigt) erzielbare Übertragungskennlinie **45** aufgezeigt. Eine solche Übertragungskennlinie **45** ist für einen Wankstabilisator **32** (beispielsweise wie in Fig. 5 gezeigt) nützlich. Die Abszisse **46** ist in Grad aufgetragen, beispielsweise von -6° bis +6°. Die Ordinate **47** ist in Kilo-Newtonmeter aufgetragen, beispielsweise von -1,5 kNm bis +1,5 kNm. Die Übertragungskennlinie **45** ist um den Nulldurchgang **48** flach und annähernd gerade (also mit etwa konstanter Steigung). Damit ist ein weiches Ansprechverhalten bei geringen Verdrehwinkeln **30** erzielt. Ab einem vorbestimmten Verdrehwinkel **30,** beispielsweise -4° beziehungsweise +4°, ist ein plötzlicher, aber stetiger Übergang hin zu einer steilen und ebenfalls annähernd geraden Steigung (also einem schnellen Steifigkeitszuwachs) gebildet. Innerhalb eines geringen Bereichs des Verdrehwinkels **30** (beispielsweise von +4° bis +6° beziehungsweise -4° bis -6°) ist eine Verzehnfachung (oder mehr) der Torsionssteifigkeit erreicht (beispielsweise von etwa 0,15 kNm auf 1,5 kNm). Es sei darauf hingewiesen, dass die Übertragungskennlinie **45** in weiten Grenzen beliebig einstellbar ist. Zudem ist bei entsprechender Auslegung eine Hysterese der Übertragungskennlinie **45** wie gezeigt vernachlässigbar. Beispielsweise beträgt eine Hysterese im Nulldurchgang **48** weniger als 0,5 Nm [ein halbes Newtonmeter].

In Fig. 5 ist ein aktiver Wankstabilisator **32** mit einem Pendelwippendämpfer 1 nach Fig. 1 bis Fig. 3 beispielhaft gezeigt. Der Wankstabilisator **32** weist einen linken Radfederanschluss **36** für beispielsweise einen (ausschnittsweise dargestellten) linken Drehstab **49** und einen rechten Radfederanschluss **37** für beispielsweise einen (ausschnittsweise dargestellten) rechten Drehstab **50** auf. Die Seitenbezeichnung ist beliebig und hier ohne Ausschluss der Allgemeinheit gemäß der Darstellung gewählt. Über ein Gehäuse **51** ist der linker Radfederanschluss **36** über dessen Stator **52** mit dem als elektrische Maschine ausgeführten Aktuator **38** drehmomentübertragend verbunden. Der Rotor **53** des Aktuators **38** ist über ein Planetengetriebe **39,** welches in Reihe geschaltet eine erste Planetenstufe **54,** eine zweite Planetenstufe **55** und eine dritte Planetenstufe **56** umfasst, mit der Ausgangsseite **4** des Pendelwippendämpfer **1** drehmomentübertragend verbunden. Die Eingangsseite **3** des Pendelwippendämpfers **1** wiederum ist mit dem rechten Radfederanschluss **37** drehmomentübertragend verbunden. Eine drehmomentübertragende Verbindung zwischen dem linken Radfederanschluss **36** und dem rechten Radfederanschluss **37** ist somit ausschließlich über den Aktuator **38,** das Planetengetriebe **39** und den Pendelwippendämpfer **1** gebildet. Damit ist zum einen eine Drehmomentübertragung mittels des Pendelwippendämpfers **1** gedämpft, beispielsweise gemäß der Übertragungskennlinie **45** wie in Fig. 4 gezeigt, und/oder moduliert. Zum anderen sind kleine Drehmomentausschläge sowie die Folge einer Hysterese-Eigenschaft einer konventionellen Dämpfervorrichtung von dem Planetengetriebe **39** und dem Aktuator **38** ferngehalten. Mittels des Aktuators **38** ist zudem ein Drehmoment erzeugbar, sodass an die beiden Radfederanschlüsse **36,37** ein größeres (gegenläufiges) Drehmoment übertragbar ist, als von dem verursachenden Rad **57,58** (beziehungsweise Drehstab **49,50)** induziert ist. Der Aktuator **38** ist hier mittels einer internen Sensorik, hier beispielsweise eines magneto-elastischen Momentensensors **59** und eines Rotorstellungssensors **60,** gesteuert.

In Fig. 6 ist rein schematisch in Draufsicht ein Kraftfahrzeug **35** mit je einem Wankstabilisator **32** an den Radachsen **33,34** gezeigt. Bei diesem Kraftfahrzeug **35** ist die (entlang der Fahrzeuglängsachse **61)** hintere Radachse **34** mittels einer (beispielsweise rein elektrischen) Antriebsmaschine **40** angetrieben. Die vordere Radachse **33** ist (beispielsweise ausschließlich) die Lenkachse zum Steuern der Fahrtrichtung des Kraftfahrzeugs **35** aus der Fahrerkabine **62** heraus mittels des Lenkrads **63** eingerichtet. Wenn beispielsweise das jeweils linke Rad **57** einer Radachse **33,34** aufgrund einer Kurvenfahrt (wie hier angedeutet nach links) einfedert, wird diese relative Aufwärtsbewegung des linken (also Kurven-äußeren) Rads **57** hin zu der Karosserie des Kraftfahrzeugs **35** in dem linken Drehstab **49** in ein Drehmoment umgesetzt und in den Wankstabilisator **32** geleitet. Dort wird das Drehmoment (gegebenenfalls aktiv verstärkt) an den rechten (Kurven-inneren) Drehstab **50** weitergegeben. Das entlastete Federbein des rechten Rads **58** wird damit belastet und bildet damit ein Widerlager für das belastete linke Rad **57.** Damit wird eine Rollneigung des Kraftfahrzeugs **35** verringert. Das Kraftfahrzeug **35** fährt mit wenig Rollrate durch die (Links-) Kurve. Wenn hingegen einzig Bodenunebenheiten eine Auf- und Ab-Bewegung eines Rads **57,58** verursachen, wird aufgrund der Weichheit dieses resultierende Drehmoment von dem Pendelwippendämpfer **1** absorbiert beziehungsweise deutlich reduziert. Das Kraftfahrzeug **35** schaukelt damit nicht auf.

Der hier vorgeschlagene Pendelwippendämpfer ist kompakt und ermöglicht die Erzeugung einer hohen Torsionssteifigkeit. Der Wankstabilisator ist mit verringerten Klappergeräuschen betreibbar.

## Patentansprüche

1. Pendelwippendämpfer (1) mit einer Verdrehachse (2), aufweisend zumindest die folgenden Komponenten:
- eine Eingangsseite (3);
- eine Ausgangsseite (4);
- einen Energiespeicher (5) zum Übertragen eines Drehmoments zwischen der Eingangsseite (3) und der Ausgangsseite (4);
- eine Mehrzahl von Wippenelementen (6) mit einer eingangsseitigen Rollenbahn (7) und einer ausgangsseitigen Rollenbahn (8); und
- eine zu der Anzahl der Rollenbahnen (7,8) der Wippenelemente (6) korrespondierende Anzahl von Wälzkörpern (9,10),
wobei die Eingangsseite (3) zu einer jeweiligen der eingangsseitigen Rollenbahnen (7) je eine korrespondierende eingangsseitige Gegenbahn (11) aufweist, zwischen welchen jeweils ein eingangsseitiger Wälzkörper (9) mittels des Energiespeichers (5) abrollbar eingespannt ist, sowie
die Ausgangsseite (4) zu einer jeweiligen der ausgangsseitigen Rollenbahnen (8) je eine korrespondierende ausgangsseitige Gegenbahn (12) aufweist, zwischen welchen jeweils ein ausgangsseitiger Wälzkörper (10) mittels des Energiespeichers (5) abrollbar eingespannt ist,
**dadurch gekennzeichnet, dass**
von den Wippenelementen (6) jeweils drei separate und axial zueinander versetzt angeordnete Teilbahnen (13,14,15) umfasst sind, von welchen die Rollenbahnen (7,8) gebildet sind.

2. Pendelwippendämpfer (1) nach Anspruch 1, wobei
die eingangsseitigen Rollenbahnen (7) und die ausgangsseitigen Rollenbahnen (8) an den Wippenelementen (6) jeweils radial-außenseitig angeordnet sind.

3. Pendelwippendämpfer (1) nach Anspruch 1 oder Anspruch 2, wobei die Eingangsseite (3) und die Ausgangsseite (4) axial nebeneinander angeordnet sind,
wobei bevorzugt die Eingangsseite (3) und/oder die Ausgangsseite (4) zwei separate Teilelemente (16,17) umfasst.

4. Pendelwippendämpfer (1) nach einem der vorhergehenden Ansprüche, wobei der Energiespeicher (5) zumindest eine Schraubendruckfeder (18,19) mit einer geraden Federachse (20) umfasst,
wobei bevorzugt die Federachse (20) zwischen den eingangsseitigen Wälzkörpern (9) und den ausgangsseitigen Wälzkörpern (10) verlaufend angeordnet ist.

5. Pendelwippendämpfer (1) nach Anspruch 4, wobei
ein Drahtdurchmesser (21) zumindest einer der Schraubendruckfedern (18,19) um weniger als 20 % von einem Rollendurchmesser (22) der Wälzkörper (9,10) bei einer Lauffläche (23,24,25,26) abweicht, bevorzugt der Drahtdurchmesser (21) um mehr als 5 % größer als der Rollendurchmesser (22) ist,
wobei bevorzugt der Drahtdurchmesser (21) größer als 5 mm ist und der Kerndurchmesser (27), welcher von dem Außenumfang der Wippenelemente (6) gebildet ist, kleiner als 80 mm ist, bevorzugt kleiner als 40 mm ist.

6. Pendelwippendämpfer (1) nach Anspruch 4 oder Anspruch 5, wobei zumindest eines der Wippenelemente (6) eine Vertiefung (28) in seiner Aufnahmefläche (29) zum Aufnehmen zumindest einer, bevorzugt der inneren, der Schraubendruckfedern (19) aufweist.

7. Pendelwippendämpfer (1) nach einem der vorhergehenden Ansprüche, wobei ein maximaler relativer Verdrehwinkel (30) zwischen der Eingangsseite (3) und der Ausgangsseite (4) weniger als 10°, bevorzugt weniger als 5°, beträgt.

8. Pendelwippendämpfer (1) nach einem der vorhergehenden Ansprüche, wobei mittels der Rollenbahnen (7,8) und der Gegenbahnen (11,12) bei einem auslegungsgemäß maximalen relativen Verdrehwinkel (30) zwischen der Eingangsseite (3) und der Ausgangsseite (4) ein maximaler Federweg (31) des Energiespeichers (5) von etwa 1 mm bis 10 mm, bevorzugt bis maximal 6 mm, bewirkt ist.

## Claims

1. A pendulum rocker damper (1) with a rotation axis (2), having at least the following components:
- an input side (3);
- an output side (4);
- an energy storage device (5) for transmitting a torque between the input side (3) and the output side (4);
- a plurality of rocker elements (6) with an input-side roller track (7) and an output-side roller track (8); and
- a number of rolling elements (9, 10) corresponding to the number of roller tracks (7, 8) of the rocker elements (6), wherein the input side (3) has a corresponding input-side counter-track (11) for each of the input-side roller tracks (7), between which an input-side rolling element (9) is rollably clamped by means of the energy storage device (5), and the output side (4) has a corresponding output-side counter-track (12) for each of the output-side roller tracks (8), between which an output-side rolling element (10) is rollably clamped by means of the energy storage device (5),
**characterised in that**
the rocker elements (6) each comprise three separate partial tracks (13, 14, 15) arranged axially offset from one another, from which the roller tracks (7, 8) are formed.

2. The pendulum rocker damper (1) according to claim 1, wherein
the input-side roller tracks (7) and the output-side roller tracks (8) are each arranged radially on the outside of the rocker elements (6).

3. The pendulum rocker damper (1) according to claim 1 or claim 2, wherein
the input side (3) and the output side (4) are arranged axially adjacent to one another,
wherein preferably the input side (3) and/or the output side (4) comprises two separate partial elements (16, 17).

4. The pendulum rocker damper (1) according to one of the preceding claims, wherein the energy storage device (5) comprises at least one helical compression spring (18, 19) with a straight spring axis (20),
wherein the spring axis (20) is preferably arranged extending between the input-side rolling elements (9) and the output-side rolling elements (10).

5. The pendulum rocker damper (1) according to claim 4, wherein
a wire diameter (21) of at least one of the helical compression springs (18, 19) deviates by less than 20% from a roller diameter (22) of the rolling elements (9, 10) at a running surface (23, 24, 25, 26), preferably the wire diameter (21) is more than 5% larger than the roller diameter (22),
wherein preferably the wire diameter (21) is greater than 5 mm and the core diameter (27), which is formed by the outer circumference of the rocker elements (6), is less than 80 mm, preferably less than 40 mm.

6. The pendulum rocker damper (1) according to claim 4 or claim 5, wherein at least one of the rocker elements (6) has a recess (28) in its receiving surface (29) for receiving at least one, preferably the inner, of the helical compression springs (19).

7. The pendulum rocker damper (1) according to any one of the preceding claims, wherein a maximum relative angle of rotation (30) between the input side (3) and the output side (4) is less than 10°, preferably less than 5°.

8. The pendulum rocker damper (1) according to any one of the preceding claims, wherein the roller tracks (7, 8) and the counter tracks (11, 12) cause, at a design maximum relative angle of rotation (30) between the input side (3) and the output side (4), a maximum spring deflection (31) of the energy storage device (5) of approximately 1 mm to 10 mm, preferably up to 6 mm.

## Revendications

1. Amortisseur oscillant à balancier (1) comportant un axe de rotation (2), présentant au moins les composants suivants :
- un côté entrée (3) ;
- un côté sortie (4) ;
- un dispositif de stockage d'énergie (5) pour transmettre un couple entre le côté entrée (3) et le côté sortie (4) ;
- une pluralité d'éléments basculants (6) comportant une bande à rouleaux côté entrée (7) et une bande à rouleaux côté sortie (8) ; et
- un nombre de corps roulants (9, 10) correspondant au nombre de bandes à rouleaux (7, 8) des éléments basculants (6), dans lequel le côté entrée (3) présente une bande inverse côté entrée (11) correspondante pour une bande respective des bandes à rouleaux côté entrée (7), entre lesquelles un corps roulant côté entrée (9) est serré de manière à pouvoir rouler par le biais du dispositif de stockage d'énergie (5), et le côté sortie (4) présente une bande inverse côté sortie (12) correspondante pour une bande respective des bandes à rouleaux côté sortie (8), entre lesquelles un corps roulant côté sortie (10) est serré de manière à pouvoir rouler par le biais du dispositif de stockage d'énergie (5),
**caractérisé en ce que**
les éléments basculants (6) comprennent respectivement trois bandes partielles (13, 14, 15) séparées et agencées axialement de manière décalée les unes par rapport aux des autres, à partir desquelles sont formées les bandes à rouleaux (7, 8).

2. Amortisseur oscillant à balancier (1) selon la revendication 1, dans lequel
les bandes à rouleaux côté entrée (7) et les bandes à rouleaux côté sortie (8) sont respectivement agencées radialement côté extérieur sur les éléments basculants (6).

3. Amortisseur oscillant à balancier (1) selon la revendication 1 ou la revendication 2, dans lequel
le côté entrée (3) et le côté sortie (4) sont agencés axialement l'un à côté de l'autre,
dans lequel de préférence le côté entrée (3) et/ou le côté sortie (4) comprennent deux éléments partiels (16, 17) séparés.

4. Amortisseur oscillant à balancier (1) selon l'une des revendications précédentes, dans lequel le dispositif de stockage d'énergie (5) comprend au moins un ressort de compression hélicoïdal (18, 19) comportant un axe de ressort rectiligne (20),
dans lequel l'axe de ressort (20) est de préférence agencé pour s'étendre entre les corps roulants côté entrée (9) et les corps roulants côté sortie (10).

5. Amortisseur oscillant à balancier (1) selon la revendication 4, dans lequel
un diamètre de fil (21) d'au moins un des ressorts de compression hélicoïdaux (18, 19) s'écarte de moins de 20 % d'un diamètre de rouleau (22) des corps roulants (9, 10) dans une surface de roulement (23, 24, 25, 26), de préférence le diamètre de fil (21) est supérieur de plus de 5 % au diamètre de rouleau (22),
dans lequel de préférence le diamètre de fil (21) est supérieur à 5 mm et le diamètre de noyau (27), qui est formé par la circonférence extérieure des éléments basculants (6), est inférieur à 80 mm, de préférence inférieur à 40 mm.

6. Amortisseur oscillant à balancier (1) selon la revendication 4 ou la revendication 5, dans lequel au moins l'un des éléments basculants (6) présente un évidement (28) dans sa surface de réception (29) pour recevoir au moins un des ressorts de compression hélicoïdaux (19), de préférence le ressort intérieur.

7. Amortisseur oscillant à balancier (1) selon l'une des revendications précédentes, dans lequel un angle de rotation relatif maximal (30) entre le côté entrée (3) et le côté sortie (4) est inférieur à 10 °, de préférence inférieur à 5 °.

8. Amortisseur oscillant à balancier (1) selon l'une des revendications précédentes, dans lequel, par le biais des bandes à rouleaux (7, 8) et des bandes inverses (11, 12), à un angle de rotation relatif maximal (30) conforme à la conception entre le côté entrée (3) et le côté sortie (4), un débattement de ressort maximal (31) du dispositif de stockage d'énergie (5) d'environ 1 mm à 10 mm, de préférence jusqu'à un maximum de 6 mm, est réalisé.
